# EUROPÄISCHE PATENTSCHRIFT

(11) **EP 0 817 736 B1**
(45) Veröffentlichungstag und Bekanntmachung des Hinweises auf die Patenterteilung: **14.08.2002**
(21) Anmeldenummer: 95915845.2
(22) Anmeldetag: 05.04.1995
(51) Int. Cl.: B60T 8/32, B60T 13/72

(54) **HYDRAULISCHE BREMSANLAGE FÜR KRAFTFAHRZEUGE**
MOTOR VEHICLE HYDRAULIC BRAKING SYSTEM
SYSTEME DE FREINAGE HYDRAULIQUE POUR AUTOMOBILE

(43) Veröffentlichungstag der Anmeldung: 14.01.1998
(73) Patentinhaber: Continental Teves AG & Co. oHG, 60488 Frankfurt (DE)
(72) Erfinder: BILL, Karlheinz, D-63303 Dreieich (DE)
(86) Internationale Anmeldenummer: EP9501237
(87) Internationale Veröffentlichungsnummer: WO9631374

(56) Entgegenhaltungen:
- WO-A-91/08131
- WO-A-94/11226
- DE-A- 4 004 065
- DE-C- 4 102 497
- DE-C- 4 208 496
- ATZ AUTOMOBILTECHNISCHE ZEITSCHRIFT, Bd. 97, Nr. 1, Januar 1995 STUTTGART (GERMANY), Seiten 36-37, XP 000486418 J. PICKENHAHN 'Elektronisch geregelter Bremskraftverstärker'

## Beschreibung

Die Erfindung betrifft eine hydraulische Bremsanlage für Kraftfahrzeuge mit einer aus einem Hauptbremszylinder sowie einem ihm vorgeschalteten, mittels eines Bremspedals betätigbaren Unterdruckbremskraftverstärker bestehenden Betätigungseinheit, mit Radbremsen, die an die Druckräume des Hauptbremszylinders unter Zwischenschaltung eines ABS-Hydroaggregats angeschlossen sind,
mit Radbremsen, die an die Druckräume des Hauptbremszylinders unter Zwischenschaltung eines ABS/Hydroaggregats angeschlossen sind,
mit einem mit dem Bremspedal zusammenwirkenden Bremslichtschalter,
mit einer elektrischen Schalteinrichtung, die eine Fahrerwunscherkennung im Sinne einer Zurücknahme der Bremswirkung ermöglicht,
mit einem Wegsensor zum Erfassen der Bremspedal-Betätigungsgeschwindigkeit,
sowie mit einer elektronischen Steuereinheit, der die elektrischen Signale des Bremslichtschalters, der elektrischen Schalteinrichtung, sowie des Wegsensors zugeführt werden und durch deren Ausgangssignale ein den Aufbau eines pneumatischen Differenzdruckes im Gehäuse des Unterdruckbremskraftverstärkers steuerndes pneumatisches Ventil unabhängig von der Betätigung durch den Fahrer im Sinne einer Vollbremsung aktivierbar ist.

Eine derartige Bremsanlage ist z.B. aus der DE-PS 42 08 496 bekannt. Die Mittel zum Erfassen der Betätigungsgeschwindigkeit sind bei der vorbekannten Bremsanlage dem Bremspedal zugeordnet und vorzugsweise durch einen als Winkelgeber ausgebildeten Pedalstellungsgeber gebildet, während die oben erwähnte Schalteinrichtung im Anlenkbereich der Betätigungsstange am Bremspedal angeordnet und durch einen Relativbewegungssenor gebildet ist. Die Anordnung der beiden Sensoreinrichtungen im Fahrerfußraum verursacht jedoch erhebliche Montagekosten, die insbesondere darauf zurückzuführen sind, daß im erwähnten Raum ein Kabelbaum verlegt werden muß. Außerdem besteht die Gefahr, daß die Funktion der bekannten Sensoreinrichtungen beispielsweise durch im Fahrerfußraum auftretenden Schmutz oder Feuchtigkeit beeinträchtigt wird.

Aus dem Fachartikel "Elektronisch geregelter Bremskraftverstärker" (ATZ Automobiltechnische Zeitschrift 97(1995) Januar, No. 1, Stuttgart, DE ist es bekannt, zur Sensierung der Bremspedalgeschwindigkeit einen Wegsensor zu verwenden, der den Weg der beweglichen Wand des Bremskraftverstärkers erfaßt. Für die einwandfreie Funktion einer mit einem derartigen, elektronisch regelbaren Bremskraftverstärker ausgestatteten fremdkraftunterstützten Bremsanlage ist die Erkennung der Position des Bremspedals wichtig, da mit zunehmendem Bremspedalweg sich die Auslöseschwelle der Fremdbetätigung ändert. Die aktuelle Position des Bremspedals ist jedoch von dem im Gehäuse des Unterdruckbremskraftverstärkers herrschenden Unterdruck, der ein Vorfahren der die Verstärkungskraft aufbringenden beweglichen Wand zur Folge hat, sowie vom Entlüftungsgrad der Bremsanlage abhängig. Im Hinblick auf die Wichtigkeit des absoluten Pedalweges muß der Wegsensor kalibriert werden, d.h., sein Null- bzw. Ausgangspunkt muß festgelegt werden. Eine einmalige Kalibrierung während der Montage des Gerätes reicht jedoch nicht aus, da sich infolge von Verschleiß über die Betriebsdauer des Systems Verschiebungen ergeben können. Außerdem wird bei einer einmaligen Kalibrierung des Wegsensors eine Änderung der Befestigungsposition des Wegsensors in seiner Befestigung nicht erkannt.

Es ist daher Aufgabe der vorliegenden Erfindung, eine hydraulische Bremsanlage der eingangs genannten Gattung dahingehend zu verbessern, daß die störenden Einflüsse der vorhin genannten Faktoren weitgehend eliminiert werden, wodurch eine beträchtliche Erhöhung ihrer Betriebssicherheit erreicht wird.

Diese Aufgabe wird erfindungsgemäß dadurch gelöst, daß die elektronische Steuereinheit Mittel aufweist, die eine kontinuierliche Kalibrierung des Wegsensors ermöglichen.

Dabei ist es besonders vorteilhaft, wenn der elektronischen Steuereinheit die Zustandsdaten des Wegsensors, des Bremslichtschalters sowie der elektrischen Schalteinrichtung kontinuierlich zugeführt werden.

Eine Speicherung des ermittelten Kalibrierwertes bzw. des Null-Punktes des Wegsensors in der elektronischen Steuereinheit erfolgt vorzugsweise in Abhängigkeit vom Schaltzustand des Bremslichtschalters sowie der elektrischen Schalteinrichtung, insbesondere nur dann, wenn sich sowohl der Bremslichtschalter als auch die elektrische Schalteinrichturg in unbetätigtem Zustand befinden.

Eine weitere Erhöhung der Funktionssicherheit der erfindungsgemäßen Bremsanlage wird schließlich dadurch erreicht, daß die elektronische Steuereinheit Mittel aufweist, die eine Erkennung der durchgeführten Kalibrierung ermöglichen.

Bei einer vorteilhaften Weiterbildung des Erfindungsgegenstandes ist der Wegsensor als proportional arbeitender Sensor ausgebildet, der durch axiale Bewegung der beweglichen Wand des Unterdruckbremskraftverstärkers betätigbar ist, wobei dessen Ausgangssignal dem Betätigungsweg der beweglichen Wand direkt proportional ist und in der elektronischen Steuereinheit einer zeitlich differenzierenden Verarbeitung unterworfen wird. Der Wegsensor ist dabei vorzugsweise als lineares Potentiometer ausgebildet.

Eine besonders kompakt bauende Ausgestaltung der Erfindung besteht darin, daß das pneumatische Ventil durch das mittels des Bremspedals betätigbare Steuerventil des Unterdruckbremskraftverstärkers gebildet ist, das zusätzlich durch elektromechanische, mittels der elektronischen Steuereinheit ansteuerbare Mittel betätigbar ist.

Die elektromechanischen Mittel sind bei einer vorteilhaften Weiterbildung des Erfindungsgegenstandes durch einen Elektromagneten sowie einen mit dem Elektromagneten zusammenwirkenden Dichtsitz des Steuerventils gebildet, wobei der Elektromagnet als Bestandteil eines in kraftübertragender Verbindung mit dem Bremspedal stehenden Ventilkolbens ausgebildet ist. Durch diese Maßnahmen wird erreicht, daß die zum Wegsensor führenden elektrischen Leitungen in dem zum Elektromagneten verlegten Kabel integriert werden können, so daß eine optimale Raumausnutzung gewährleistet ist.

Eine weitere kostengünstig herstellbare vorteilhafte Ausführung des Erfindungsgegenstandes sieht vor, daß die elektrische Schalteinrichtung in einem das Steuerventil aufnehmenden Steuergehäuse angeordnet ist. Die Schalteinrichtung besteht dabei vorzugsweise aus einem am Ventilkolben angeordneten Mikroschalter sowie einem im Steuergehäuse verschiebbar geführten Betätigungselement, das in Ruhestellung des Unterdruckbremskraftverstärkers an einem verstärkergehäusefesten Anschlag anliegt.

Weitere Einzelheiten, Merkmale und Vorteile der Erfindung gehen aus der nachfolgenden Beschreibung eines Ausführungsbeispiels unter Bezugnahme auf die beiliegende Zeichnung hervor, in der für einander entsprechende Einzelteile gleiche Bezugszeichen verwendet werden. Es zeigen:
- Fig. 1: eine Ausführung der erfindungsgemäßen Bremsanlage in schematischer Darstellung;
- Fig. 2: eine Ausführung des in der erfindungsgemäßen Bremsanlage nach Fig. 1 einsetzbaren pneumatischen Bremskraftverstärkers im Axialschnitt, teilweise weggebrochen; und
- Fig. 3 u.Fig. 4: zwei Flußdiagramme, die in der elektronischen Steuereinheit bei der Kalibrierung stattfindende Funktionsabläufe darstellen.

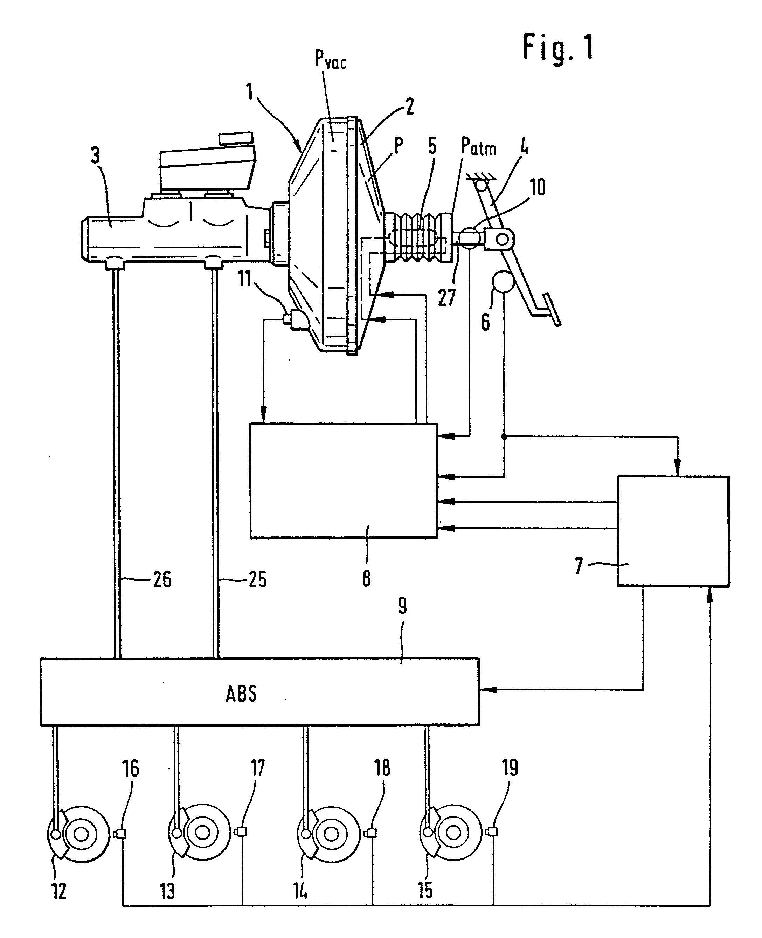

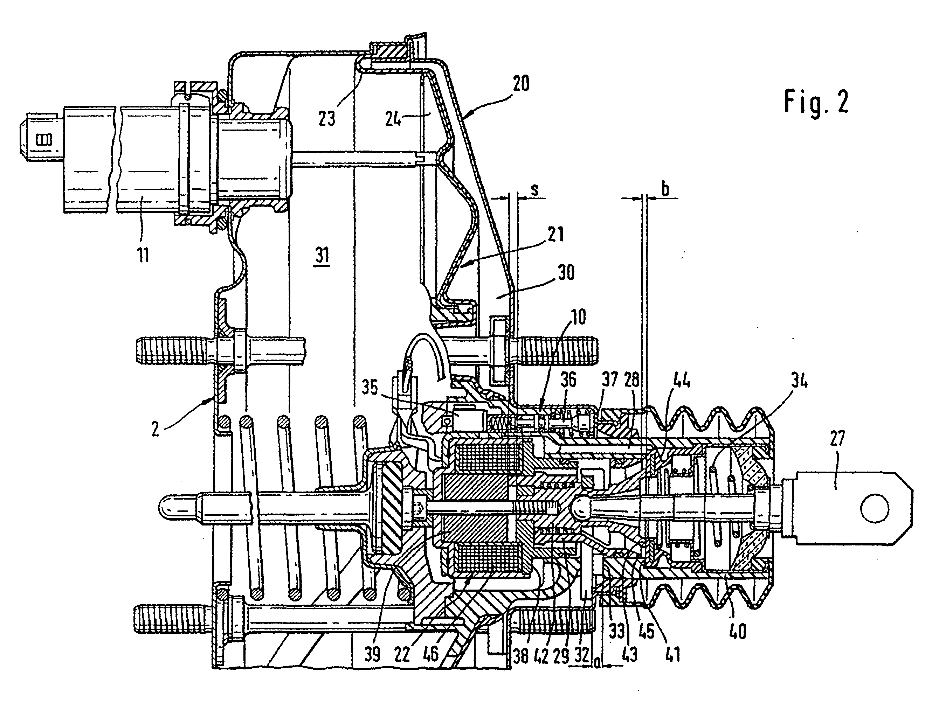

Die in Fig. 1 gezeigte erfindungsgemäße Bremsanlage für Kraftfahrzeuge besteht im wesentlichen aus einer Betätigungseinheit 1, einer elektronischen Steuereinheit 8, Radbremsen 12,13,14,15, einem zwischen Radbremsen 12 bis 15 und Betätigungseinheit 1 angeordneten ABS/Hydroaggregat bzw. Druckmodulator 9 sowie einem mit der elektronischen Steuereinheit 8 zusammenwirkenden ABS/ASR-Regler 7, der Steuersignale für den Druckmodulator 9 erzeugt. Jedem der nicht gezeigten Fahrzeugräder ist je ein Radsensor 16,17,18,19 zugeordnet, dessen der Radgeschwindigkeit entsprechendes Steuersignal dem ABS/ASR-Regler 7 zugeführt wird. Die Betätigungseinheit 1 besteht ihrerseits aus einem mittels eines Bremspedals 4 betätigbaren pneumatischen Bremskraftverstärker, vorzugsweise einem Unterdruck-bremskraftverstärker 2, dem ein Hauptbremszylinder 3, vorzugsweise ein Tandemhauptzylinder, nachgeschaltet ist, dessen nicht gezeigte Druckräume über hydraulische Leitungen 25,26 mit dem Druckmodulator 9 in Verbindung stehen. An das Bremspedal 4 ist eine Betätigungsstange 27 angekoppelt, die eine Betätigung eines lediglich schematisch angedeuteten Steuerventils 5 ermöglicht, das den Aufbau eines pneumatischen Differenzdruckes im Gehäuse des Unterdruckbremskraftverstärkers 2 steuert. Ein durch Steuersignale der elektronischen Steuereinheit 8 ansteuerbarer Elektromagnet 22 (Fig. 2) ermöglicht dabei eine Fremdbetätigung des Steuerventils 5 unabhängig von einer am Bremspedal 4 eingeleiteten Betätigung.

Ein mit dem Bremspedal 4 in Wirkverbindung stehender Bremslichtschalter 6 ermöglicht die Erkennung einer auf dem Bremspedal 4 eingeleiteten Betätigung, während die Betätigungsgeschwindigkeit mittels einer Sensoreinrichtung sensiert wird, die vorzugsweise durch einen analog arbeitenden, dem Unterdruckbremskraftverstärker 2 zugeordneten Wegsensor 11 gebildet ist. Der Wegsensor 11, dessen Ausgangssignale der elektronischen Steuereinheit zugeführt werden und von ihr während des ersten Zeitabschnitts der Bremsbetätigung als Entscheidungsgrundlage für den aktiven Bremseneingriff ausgewertet werden, kann dabei vorzugsweise als lineares Potentiometer ausgebildet sein. Die Auswertung des Pedalantrittsgradienten erfolgt in der elektronischen Steuereinheit 8, indem die zeitliche Änderung der analogen Signale des Potentiometers gebildet wird. Wenn der so ermittelte Wert einen vorher festgelegten Schwellenwert überschreitet, erzeugt die Steuereinheit 8 ein Steuersignal zur Ansteuerung des das Steuerventil 5 betätigenden Elektromagneten 22.

Um zu gewährleisten, daß der Elektromagnet 22 nach Beendigung des fremdkraftunterstützten Bremsvorgangs auch sicher abgeschaltet wird, ist schließlich eine elektrische Schalteinrichtung 10 vorgesehen, die in Fig. 1 lediglich schematisch angedeutet ist.

Wie insbesondere Fig. 2 zeigt, ist das Verstärkergehäuse 20 des in Fig. 1 dargestellten Unterdruckbremskraftverstärkers 2 durch eine axial bewegliche Wand 21 in eine Arbeitskammer 30 und eine Unterdruckkammer 31 unterteilt. Die axial bewegliche Wand 21 besteht aus einem aus Blech tiefgezogenen Membranteller 24 und einer daran anliegenden flexiblen Membran 23, die zwischen dem äußeren Umfang des Membrantellers 24 und dem Verstärkergehäuse 20 eine Rollfalte als Abdichtung bildet.

Das durch die Betätigungsstange 27 betätigbare Steuerventil 5 ist in einem im Verstärkergehäuse 20 abgedichtet geführten, die bewegliche Wand 21 tragenden Steuergehäuse 40 untergebracht und besteht aus einem am Steuergehäuse 40 ausgebildeten ersten Dichtsitz 41, einem an einem mit der Betätigungsstange 27 verbundenen Ventilkolben 42 ausgebildeten zweiten Dichtsitz 43 sowie einem mit beiden Dichtsitzen 41,43 zusammenwirkenden Ventilkörper 44. Die Arbeitskammer 30 ist mit der Unterdruckkammer 31 über einen seitlich im Steuergehäuse 5 verlaufenden Kanal 28 verbindbar.

Um die vorhin erwähnte, von der Betätigungsstange 22 unabhängige Fremdbetätigung des Bremskraftverstärkers 2 einzuleiten, ist radial zwischen dem ersten (41) und dem zweiten Dichtsitz 43 ein dritter Dichtsitz 45 vorgesehen, der mittels des Elektromagneten 22 betätigbar ist, der zusammen mit dem Ventilkolben 42 im Steuergehäuse 40 verschiebbar ist.

Der Elektromagnet 22 besteht aus einer auf einem mit dem Ventilkolben 42 verbundenen Führungsteil 38 aufgesteckten Spule 46 sowie einem darin verschiebbar angeordneten zylindrischen Anker 39, der mit einer im Steuergehäuse 40 abgedichtet geführten Hülse 29 in kraftübertragender Verbindung steht, an der der dritte Dichtsitz 45 ausgebildet ist, so daß eine Übertragung der vom Elektromagneten 22 aufgebrachten Fremdbetätigungskraft auf den dritten Dichtsitz 45 ermöglicht wird. Der dritte Dichtsitz 45 ist dabei gegenüber dem am Ventilkolben 42 ausgebildeten zweiten Dichtsitz 43 axial versetzt (s. Abstand b) angeordnet.

Bei einer durch Bestromen der Spule 46 eingeleiteten Fremdbremsung wird der Anker 39 in der Zeichnung nach rechts verschoben, wodurch der dritte Dichtsitz 45 zunächst nach Überbrückung des Abstandes "b" an der Dichtfläche des Ventilkörpers 44 zur Anlage kommt. Durch diese Anlage wird der am Steuergehäuse 40 ausgebildete erste Dichtsitz 41 wirkungsmäßig überbrückt, so daß keine Verbindung zwischen den pneumatischen Kammern 30,31, des Bremskraftverstärkers 2 mehr besteht. Anschließend bewegen sich der dritte Dichtsitz 45 und der Ventilkörper 44 zusammen weiter, wobei der zweite Dichtsitz 43 geöffnet und die belüftbare Arbeitskammer 30 des Bremskraftverstärkers 2 belüftet wird. Die Bewegung des dritten Dichtsitzes 45 dauert so lange, bis der Anker 39 am Führungsteil 38 anschlägt und der Spalt "s" zwischen den beiden Teilen zu Null wird. Bei fehlender Betätigungskraft an der Betätigungsstange 27 läuft das Steuergehäuse 40 relativ zum Ventilkolben 42 um einen Weg vor, der dem Abstand "a" zwischen einem die Bewegung des Ventilkolbens 42 begrenzenden Querglied 32 und einer am Steuergehäuse 40 ausgebildeten Anschlagfläche 33 entspricht. Ursache hierfür ist eine Kolbenstangenrückholfeder 34, die über die Betätigungsstange 27 den Ventilkolben 42 nach rechts bewegt und versucht, den zweiten Dichtsitz 45 wieder zu schließen. Da sich aber der dritte Dichtsitz 28 aufgrund der festen Verbindung von Elektromagnet 22 und Ventilkolben 42 synchron mitbewegt, wird der Spalt zwischen dem Ventilkörper 44 und dem zweiten Dichtsitz 43 offengehalten, und zwar um das Maß s-b. Hierdurch wird die belüftbare Arbeitskammer 30 des Bremskraftverstärkers 2 mit der Atmosphäre verbunden und es wird eine Bremskraft erzeugt.

Wie schließlich der Fig. 2 zu entnehmen ist, besteht die vorhin genannte Schalteinrichtung 10 aus einem vorzugsweise am Ventilkolben 42 befestigten, zwei Schaltstellungen aufweisenden Mikroschalter 35 sowie einem den Mikroschalter 35 durch eine translatorische Bewegung betätigenden Betätigungselement 36, das in einer im Steuergehäuse 40 vorgesehenen Bohrung abgedichtet geführt ist und mit einem verstärkergehäusefesten Anschlag zusammenwirkt, der das Bezugszeichen 37 trägt und beispielsweise durch einen radialen Kragen der hinteren Verstärkergehäuseschale gebildet sein kann.

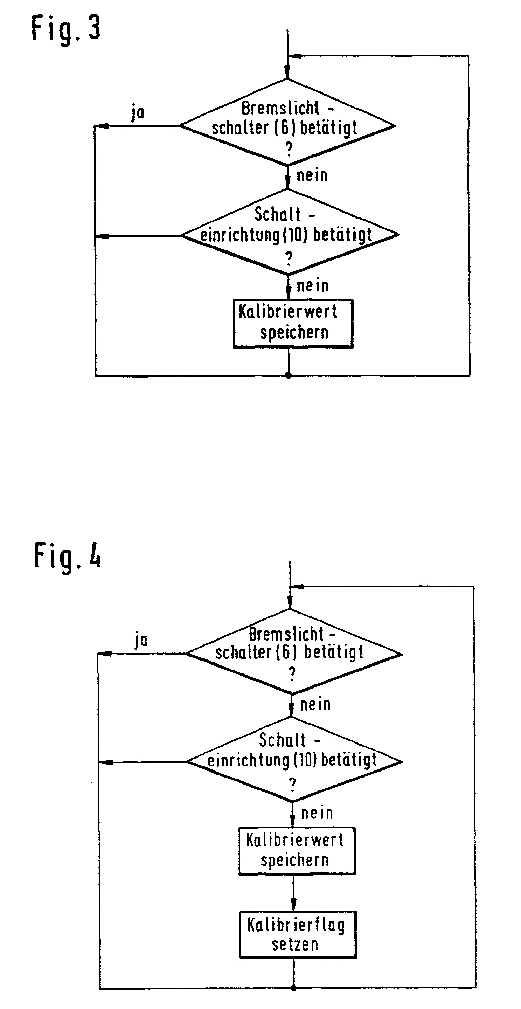

In der Beschreibungseinleitung wurde bereits die Notwendigkeit einer kontinuierlichen Kalibrierung des Wegsensors 11 erwähnt. Aus diesem Grund empfängt die elektronische Steuereinheit 8 kontinuierlich die Zustandsdaten des Wegsensors 11, des Bremslichtschalters 6 sowie der elektrischen Schalteinrichtung 10. Der Null- bzw. Ausgangspunkt des Wegsensors wird dann gesetzt bzw. dann gespeichert, wenn weder der Bremslichtschalter 6 noch die elektrische Schalteinrichtung 10 sich in betätigtem Zustand befinden. Ab dem Augenblick, in dem sich der Schaltzustand des Bremslichtschalters 6 oder der elektrischen Schalteinrichtung 10 geändert hat, wird der Kalibrierwert nicht mehr verändert. Die beschriebene Vorgehensweise ist der Fig. 3 der Zeichnung zu entnehmen.

Durch die in Fig. 4 dargestellte modifizierte Vorgehensweise kann mittels eines Kalibrierflags überprüft werden, ob nach der letzten Fremdbetätigung der erfindungsgemäßen Bremsanlage überhaupt eine Kalibrierung des Wegsensors 11 möglich war oder ob ein Defekt an der betreffenden Sensorik vorliegt. Durch diese Maßnahme kann die Fremdansteuerung des Unterdruckbremskraftverstärkers 2 auf eine einfache Weise verhindert werden, falls die erwähnte Sensorik nicht in Ordnung ist.

Die zuletzt beschriebenen Maßnahmen ermöglichen eine rechtzeitige Fehlererkennung von Wegsensor 11, Bremslichtschalter 6 und Schalteinrichtung 10. Ein weiterer Vorteil besteht darin, daß die durchgeführte Kalibrierung unabhängig von dem im Verstärkergehäuse herrschenden Unterdruck erfolgt, wobei allgemeine Veränderungen des Betätigungsgrundwertes oder geringfügige Verschiebungen des Wegsensors 11 kompensiert werden. Außerdem werden durch die beschriebene dynamische Kalibrierung Fehler im Absolutmeßwert des Wegsensors 11 eliminiert, die durch unregelmäßige Bewegungen der beweglichen Wand 21 des Unterdruckbremskraftverstärkers 2 entstehen können.

Bezugszeichenliste
- 1: Betätigungeinheit
- 2: Bremskraftverstärker
- 3: Hauptbremszylinder
- 4: Bremspedal
- 5: Steuerventil
- 6: Bremslichtschalter
- 7: ABS/ASR-Regler
- 8: Steuereinheit
- 9: ABS-Hydroaggregat
- 10: Schalteinrichtung
- 11: Wegsensaor
- 12: Radbremse
- 13: Radbremse
- 14: Radbremse
- 15: Radbremse
- 16: Radsensor
- 17: Radsensor
- 18: Radsensor
- 19: Radsensor
- 20: Verstärkergehäuse
- 21: Wand
- 22: Elektromagnet
- 23: Rollmembran
- 24: Membranteller
- 25: Leitung
- 26: Leitung
- 27: Betätigungsstange
- 28: Kanal
- 29: Hülse
- 30: Arbeitskammer
- 31: Unterdruckkammer
- 32: Querglied
- 33: Anschlagfläche
- 34: Kolbenstangenrückholfeder
- 35: Mikroschalter
- 36: Betätigungselement
- 37: Anschlag
- 38: Führungsteil
- 39: Anker
- 40: Steuergehäuse
- 41: Dichtsitz
- 42: Ventilkolben
- 43: Dichtsitz
- 44: Ventilkörper
- 45: Dichtsitz
- 46: Spule

## Patentansprüche

1. Hydraulische Bremsanlage für Kraftfahrzeuge mit einer aus einem Hauptbremszylinder (3) sowie einem ihm vorgeschalteten, mittels eines Bremspedals (4) betätigbaren Unterdruckbremskraftverstärker (2) bestehenden Betätigungseinheit (1), mit Radbremsen (12,13,14,15), die an die Druckräume des Hauptbremszylinders (3) unter Zwischenschaltung eines ABS-Hydroaggregats (9) angeschlossen sind, mit einem mit dem Bremspedal (4) zusammenwirkenden Bremslichtschalter (6), mit einer elektrischen Schalteinrichtung (10), die eine Fahrerwunscherkennung im Sinne einer Zurücknahme der Bremswirkung ermöglicht, mit einem Wegsensor (11) zum Erfassen der Bremspedal-Betätigungsgeschwindigkeit, sowie mit einer elektronischen Steuereinheit (8), der die elektrischen Signale des Bremslichtschalters (6), der elektrischen Schalteinrichtung (10), sowie des Wegsensors (11) zugeführt werden und durch deren Ausgangssignale ein den Aufbau eines pneumatischen Differenzdruckes im Gehäuse des Unterdruckbremskraftverstärkers (2) steuerndes pneumatisches Ventil (5) unabhängig von der Betätigung durch den Fahrer im Sinne einer Vollbremsung aktivierbar ist, **dadurch gekennzeichnet, daß** die elektronische Steuereinheit (8) Mittel aufweist, die eine kontinuierliche Kalibrierung des Wegsensors (11) ermöglichen.

2. Hydraulische Bremsanlage nach Anspruch 1, **dadurch gekennzeichnet, daß** der elektronischen Steuereinheit (8) die Zustandsdaten des Wegsensors (11), des Bremslichtschalters (6) sowie der elektrischen Schalteinrichtung (10) kontinuierlich zugeführt werden.

3. Hydraulische Bremsanlage nach Anspruch 2, **dadurch gekennzeichnet, daß** der Kalibrierwert bzw. der Null-Punkt des Wegsensors (11)) in Abhängigkeit vom Schaltzustand des Bremslichtschalters (6) sowie der elektrischen Schalteinrichtung (10) in der elektronischen Steuereinheit (8) gespeichert wird.

4. Hydraulische Bremsanlage nach Anspruch 3, **dadurch gekennzeichnet, daß** der Kalibrierwert nur dann gespeichert wird, wenn sich sowohl der Bremslichtschalter (6) als auch die elektrische Schalteinrichtung (10) in unbetätigtem Zustand befinden.

5. Hydraulische Bremsanlage nach einem der Ansprüche 1 bis 4, **dadurch gekennzeichnet, daß** die elektronische Steuereinheit (8) Mittel aufweist, die eine Erkennung der durchgeführten Kalibrierung ermöglichen.

6. Hydraulische Bremsanlage nach einem der Ansprüche 1 bis 5, **dadurch gekennzeichnet, daß** der Wegsensor (11) als proportional arbeitender Sensor ausgebildet ist, der durch axiale Bewegung der beweglichen Wand (21) des Unterdruckbremskraftverstärkers (2) betätigbar ist, wobei dessen Ausgangssignal dem Betätigungsweg der beweglichen Wand (21) direkt proportional ist und in der elektronischen Steuereinheit (8) einer zeitlich differenzierenden Verarbeitung unterworfen wird.

7. Hydraulische Bremsanlage nach Anspruch 6, **dadurch gekennzeichnet, daß** der Wegsensor (11) als lineares Potentiometer ausgebildet ist.

8. Hydraulische Bremsanlage nach Anspruch 6 oder 7, **dadurch gekennzeichnet, daß** das pneumatische Ventil durch das mittels des Bremspedals (4) betätigbare Steuerventil (5) des Unterdruckbremskraftverstärkers (2, gebildet ist, das zusätzlich durch elektromechanische, mittels der elektronischen Steuereinheit (8) ansteuerbare Mittel (22,29,45,46) betätigbar ist.

9. Hydraulische Bremsanlage nach Anspruch 8, **dadurch gekennzeichnet, daß** die elektromechanischen Mittel durch einen Elektromagneten (22) sowie einen mit dem Elektromagneten (22) zusammenwirkenden Dichtsitz (45) des Steuerventils (5) gebildet sind.

10. Hydraulische Bremsanlage nach Anspruch 9, **dadurch gekennzeichnet, daß** der Elektromagnet (22) als Bestandteil eines in kraftübertragender Verbindung mit dem Bremspedal (4) stehenden Ventilkolbens (42) ausgebildet ist.

11. Hydraulische Bremsanlage nach einem der vorhergehenden Ansprüche, **dadurch gekennzeichnet, daß** die elektrische Schalteinrichtung (10) in einem das Steuerventil (5) aufnehmenden Steuergehäuse (40) angeordnet ist.

12. Hydraulische Bremsanlage nach Anspruch 11, **dadurch gekennzeichnet, daß** die elektrische Schalteinrichtung (10) aus einem am Ventilkolben (42) angeordneten Mikroschalter (35) sowie einem im Steuergehäuse (40) verschiebbar geführten Betätigungselement (36) besteht, das in Ruhestellung des Unterdruckbremskraftverstärkers (2) an seinem verstärkergehäusefesten Anschlag (37) anliegt.

## Claims

1. Hydraulic brake system for automotive vehicles including an actuating unit (1) comprising a master brake cylinder (3) and a preceding vacuum brake power booster (2) operable by a brake pedal (4), wheel brakes (12, 13, 14, 15) which are connected to the pressure chambers of the master brake cylinder (3) by, the intermediary of an ABS hydraulic unit (9), a brake light switch (6) which interacts with the brake pedal (4), an electric switching device (10) which permits an identification of the driver's request to the end of reducing the braking effect, a travel sensor (11) for sensing the brake pedal actuating speed, and an electronic control unit (8) which is furnished with the electric signals of the brake light switch (6), the electric switching device (10), and the travel sensor (11), and the output signals of the control unit permit activating a pneumatic valve (5), which controls the build-up of a pneumatic differential pressure in the housing of the vacuum brake power booster (2), irrespective of the operation by the driver, to the effect of full braking,
**characterized in that** the electronic control unit (8) includes a means which permits a continuous calibration of the travel sensor (11).

2. Hydraulic brake system as claimed in claim 1,
**characterized in that** the condition variables of the travel sensor (11), the brake light switch (6), and the electric switching device (10) are continuously sent to the electronic control unit (8).

3. Hydraulic brake system as claimed in claim 2,
**characterized in that** the calibration value or the zero point of the travel sensor (11) is stored in the electronic control unit (8) in dependence on the switch condition of the brake light switch (6) and the electric switching device (10).

4. Hydraulic brake system as claimed in claim 3,
**characterized in that** the calibration value is stored only if the brake light switch (6) and the electric switching device (10) are in their non-actuated condition.

5. Hydraulic brake system as claimed in any one of claims 1 to 4,
**characterized in that** the electronic control unit (8) has a means which permits identifying the calibration performed.

6. Hydraulic brake system as claimed in any one of claims 1 to 5,
**characterized in that** the travel sensor (11) is configured as a sensor of proportional operation which is operable by the axial movement of the movable wall (21) of the vacuum brake power booster (2), the output signal of the travel sensor being directly proportional to the actuating travel of the movable wall (21) and being subjected to a time differentiation processing operation in the electronic control unit (8).

7. Hydraulic brake system as claimed in claim 6,
**characterized in that** the travel sensor (11) is a linear potentiometer.

8. Hydraulic brake system as claimed in claim 6 or claim 7,
**characterized in that** the pneumatic valve is the control valve (5) of the vacuum brake power booster (2) which is operable by the brake pedal (4) and is additionally operable by electromechanical means (22, 29, 45, 46) drivable by the electronic control unit (8).

9. Hydraulic brake system as claimed in claim 8,
**characterized in that** the electromechanical means is a solenoid (22) and a sealing seat (45) of the control valve (5) interacting with the solenoid (22).

10. Hydraulic brake system as claimed in claim 9,
**characterized in that** the solenoid (22) is a component part of a valve piston (42) which is in a force-transmitting connection with the brake pedal (4).

11. Hydraulic brake system as claimed in any one of the preceding claims,
**characterized in that** the electric switching device (10) is arranged in a control housing (40) accommodating the control valve (5).

12. Hydraulic brake system as claimed in claim 11,
**characterized in that** the electric switching device (10) includes a microswitch (35) arranged on the valve piston (42) and an actuating element (36) which is slidable in the control housing (40) and bears against a stop (37) on the booster housing in the inactive position of the vacuum brake power booster (2).

## Revendications

1. Système de freinage hydraulique pour véhicule automobile, comprenant une unité d'actionnement (1), constituée d'un maître-cylindre de frein (3) et, disposé en amont de celui-ci, un amplificateur de force de freinage à dépression (2) pouvant être actionné au moyen d'une pédale de frein (4), des freins de roue (12, 13, 14, 15), qui sont raccordés aux chambres de pression du maître-cylindre de frein (3) moyennant l'interposition d'un ensemble hydraulique ABS (9), un interrupteur de feu de freinage (6), coopérant avec la pédale de frein (4), un dispositif de commutation électrique (10), qui permet une constatation de souhait de conducteur dans le sens d'une diminution de l'action de freinage, un capteur de distance parcourue (11), servant à détecter la vitesse d'actionnement de la pédale de frein, et une unité de commande électronique (8) à laquelle les signaux électriques de l'interrupteur de feu de freinage (6), du dispositif de commutation électrique (10) et du capteur de distance parcourue (11) sont envoyés et au moyen des signaux de sortie de laquelle une valve pneumatique (5), commandant l'établissement d'une pression différentielle pneumatique dans le boîtier de l'amplificateur de force de freinage à dépression (2), peut être activé dans le sens d'un freinage total indépendamment de l'actionnement par le conducteur, **caractérisé en ce que** l'unité de commande électronique (8) comprend des moyens qui permettent un calibrage continu du capteur de distance parcourue (11).

2. Système de freinage hydraulique suivant la revendication 1, **caractérisé en ce que** les données d'état du capteur de distance parcourue (11), de l'interrupteur de feu de freinage (6) et du dispositif de commutation électrique (10) sont envoyées d'une manière continue à l'unité de commande électronique (8).

3. Système de freinage hydraulique suivant la revendication 2, **caractérisé en ce que** la valeur de calibrage ou point zéro du capteur de distance parcourue (11) est mis en mémoire dans l'unité de commande électronique (8) en fonction de l'état de commutation de l'interrupteur de feu de freinage (6) et du dispositif de commutation électrique (10).

4. Système de freinage hydraulique suivant la revendication 3, **caractérisé en ce que** la valeur de calibrage n'est mise en mémoire que lorsqu'aussi bien l'interrupteur de feu de freinage (6) que le dispositif de commutation électrique (10) se trouvent à l'état non actionné.

5. Système de freinage hydraulique suivant l'une des revendications 1 à 4, **caractérisé en ce que** l'unité de commande électronique (8) comprend des moyens qui permettent une constatation du calibrage effectué.

6. Système de freinage hydraulique suivant l'une des revendications 1 à 5, **caractérisé en ce que** le capteur de distance parcourue (11) est réalisé sous forme d'un capteur à fonctionnement proportionnel qui peut être actionné par un déplacement axial de la cloison mobile (21) de l'amplificateur de force de freinage à dépression (2), son signal de sortie étant directement proportionnel à la distance parcourue d'actionnement de la cloison mobile (21) et étant soumis à un traitement de différenciation dans le temps dans l'unité de commande électronique (8).

7. Système de freinage hydraulique suivant la revendication 6, **caractérisé en ce que** le capteur de distance parcourue (11) est réalisé sous forme d'un potentiomètre linéaire.

8. Système de freinage hydraulique suivant la revendication 6 ou 7, **caractérisé en ce que** la valve pneumatique est formée par la valve de commande (5) de l'amplificateur de force de freinage à dépression (2) qui peut être actionnée au moyen de la pédale de frein (4) et qui peut en outre être actionnée par des moyens électromécaniques (22, 29, 45, 46) pouvant être commandés au moyen de l'unité de commande électronique (8).

9. Système de freinage hydraulique suivant la revendication 8, **caractérisé en ce que** les moyens électromécaniques sont formés d'un électro-aimant (22) et d'un siège d'étanchéité (45) de la valve de commande (5), lequel coopère avec l'électro-aimant (22).

10. Système de freinage hydraulique suivant la revendication 9, **caractérisé en ce que** l'électro-aimant (22) est réalisé en tant que partie constitutive d'un piston de valve (42) qui est en liaison de transmission de force avec la pédale de frein (4).

11. Système de freinage hydraulique suivant l'une des revendications précédentes, **caractérisé en ce que** le dispositif de commutation électrique (10) est disposé dans un boîtier de commande (40) recevant la valve de commande (5).

12. Système de freinage hydraulique suivant la revendication 11, **caractérisé en ce que** le dispositif de commutation (10) est constitué d'un micro-interrupteur (35) disposé sur le piston de valve (42) et d'un élément d'actionnement (36) qui est guidé de façon à pouvoir être déplacé dans le boîtier de commande (40) et qui, dans la position de repos de l'amplificateur de force de freinage à dépression (2), prend appui sur une butée (37) fixe vis-à-vis du boîtier d'amplificateur.
